Europäisches Patentamt

European Patent Office

Office européen des brevets

(19)

(11) **EP 1 218 693 B1**

(12) ## EUROPÄISCHE PATENTSCHRIFT

(45) Veröffentlichungstag und Bekanntmachung des Hinweises auf die Patenterteilung:
**03.11.2004 Patentblatt 2004/45**

(51) Int Cl.⁷: **G01C 19/56**, G01P 9/04

(21) Anmeldenummer: **00971236.5**

(22) Anmeldetag: **26.08.2000**

(86) Internationale Anmeldenummer:
**PCT/DE2000/002931**

(87) Internationale Veröffentlichungsnummer:
**WO 2001/023837 (05.04.2001 Gazette 2001/14)**

(54) **MIKROMECHANISCHER DREHRATENSENSOR**

MICROMECHANICAL ROTATION RATE SENSOR

CAPTEUR DE VITESSE DE ROTATION MICROMECANIQUE

(84) Benannte Vertragsstaaten:
**DE FR GB IT**

(30) Priorität: **24.09.1999 DE 19945859**

(43) Veröffentlichungstag der Anmeldung:
**03.07.2002 Patentblatt 2002/27**

(73) Patentinhaber: **ROBERT BOSCH GMBH**
**70442 Stuttgart (DE)**

(72) Erfinder:
• **HAUER, Joerg**
**71762 Reutlingen (DE)**

• **FEHRENBACH, Michael**
**72766 Reutlingen (DE)**
• **FUNK, Karsten**
**Mountain View, CA 94041 (US)**

(56) Entgegenhaltungen:
DE-C- 19 746 127     US-A- 5 955 668

• **LUTZ M ET AL: "A PRECISION YAW RATE SENSOR IN SILICON MICROMACHINING" CHICAGO, IL, JUNE 16 - 19, 1997. SESSIONS 3A1 - 4D3. PAPERS NO. 3A1.01 - 4D3.14P, NEW YORK, NY: IEEE, US, 1997, Seiten 847-850, XP000870349 ISBN: 0-7803-3829-4 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 218 693 B1

## Beschreibung

STAND DER TECHNIK

Die vorliegende Erfindung betrifft einen mikromechanischen Drehratensensor mit einem Substrat, welches eine auf dem Substrat vorgesehene Verankerungseinrichtung aufweist, und mit einer ringförmigen Schwungmasse, die über eine Biegefedereinrichtung derart mit der Verankerungseinrichtung verbunden ist, daß der Verbindungsbereich mit der Verankerungseinrichtung im wesentlichen im Ringzentrum liegt, so daß die ringförmige Schwungmasse um eine senkrecht zur Substratoberfläche liegende Drehachse und um mindestens eine parallel zur Substratoberfläche liegende Drehachse elastisch aus ihrer Ruhelage auslenkbar ist.

Aus der DE-C-99 746 927, aus M. Lutz, W. Golderer, J. Gerstenmeier, J. Marek, B. Maihöfer und D. Schubert, A Precision Yaw Rate Sensor in Silicon Micromachining; SAE Technical Paper, 980267 und aus K. Funk, A. Schilp, M. Offenberg, B. Elsner, und F. Lärmer, Surface-micromachining of Resonant Silicon Structures; The 8th International Conference on Solid-State Sensors and Actuators, Eurosensors IX, Stockholm, Schweden, 25.-29. Juni 1995, Seiten 50-52 sind Drehratensensoren bekannt.

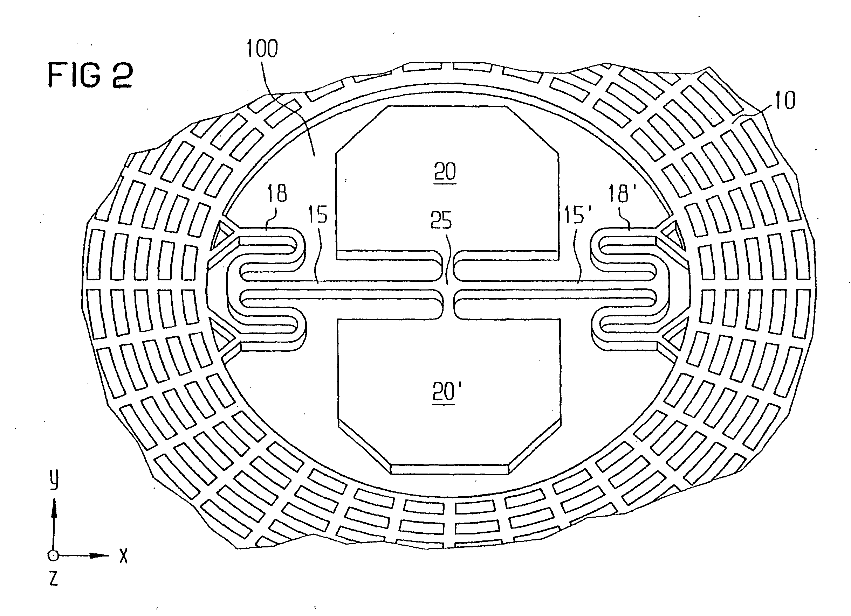

Fig. 2 zeigt eine schematische Draufsicht auf einen bekannten mikromechanischen Drehratensensor.

In Fig. 2 bezeichnen 100 ein Substrat in Form eines Siliziumwafers. 10 bezeichnet eine ringförmige Schwungmasse; 15, 15' Biegebalken; 25 eine Brücke; 18, 18' eine jeweilige geschwungene Biegefeder sowie 20, 20' einen Sockel. Letztere Teile sind aus Polysilizium über einer Siliziumoxidschicht hergestellt, wobei die Siliziumoxidschicht später im Verfahren durch Unterätzen entfernt wird, um die Teile gegenüber dem Substrat 100 auslenkbar zu gestalten. Nur die beiden Sockel 20, 20' sind über die Siliziumoxidschicht auf dem Substrat 100 verankert und bilden Fixpunkte der Sensorstruktur.

Die Funktion des derart aufgebauten Drehratensensors basiert auf dem Prinzip des Drehimpulserhaltungssatzes eines rotierenden Systems.

Allgemein gilt

$$\overline{M}=\overline{J\cdot\frac{d\omega}{dt}}\times\,\overline{\Omega},$$

wobei M das Deviationsmoment, J das Massenträgheitsmoment, dω/dt die Winkelgeschwindigkeit der Drehschwingung und Ω die gesuchte Drehrate ist.

Wird beim bekannten Drehratensensor nach Fig. 2 die um die z-Achse rotierende ringförmige Schwungmasse 10 um ihre y-Achse gedreht, weicht diese durch eine Drehung um die x-Achse aus. Diese Drehung um die x-Achse, welche durch das obige Deviationsmoment M verursacht wird, ist bei konstanter Winkelgeschwindigkeit um die z-Achse direkt proportional zur gesuchten Drehrate Ω.

Die der vorliegenden Erfindung zugrunde liegende Problematik besteht allgemein darin, daß die ersten drei Eigenfreauenzen entsprechend der x-, y- und z-Achse, die in der Figur angedeutet sind, keine optimale bzw. prozeßtechnisch leicht optimierbare Lage aufweisen.

Insbesondere ist eine Änderung der Sensormasse zur Einstellung der ersten drei Eigenfrequenzen unerwünscht, da dies meßtechnisch störende Effekte mit sich brächte.

VORTEILE DER ERFINDUNG

Die der vorliegenden Erfindung zugrundeliegende Idee besteht darin, daß die Verankerungseinrichtung zwei gegenüberliegende fest mit dem Substrat verbundene Sockel aufweist, die über eine Brücke miteinander verbunden sind. An den gegenüberliegenden Seiten der Brücke ist jeweils eine V-förmige Biegefeder der Biegefedereinrichtung derart angebracht ist, daß sich der Scheitel an der Brücke befindet und die Schenkel zur Schwungmasse hin unter einem Öffnungswinkel aufgespreizt sind.

Durch Festlegung der Federbreite und Federlänge der V-förmigen Biegefedern läßt sich die erste Eigenfrequenz um die z-Achse entsprechend der Arbeitsfrequenz im Zwangsmode des Sensors einstellen. Durch Ändern des Öffnungswinkels zwischen den jeweiligen Federschenkeln kann die Detektionsresonanzfrequenz des Sensors also die Drehung aus der Substratebene um die x- bzw. y-Achse eingestellt werden. Das Verhältnis der Eigenfrequenzen zueinander bestimmt in erheblichem Maße die Sensoreigenschaften, wie z.B. Empfindlichkeit, Störsicherheit und Temperaturstabilität.

Der erfindungsgemäße mikromechanische Drehratensensor mit den Merkmalen des Anspruchs 1 weist also gegenüber den bekannten Lösungsansätzen den besonderen Vorteil auf, daß über den Öffnungswinkel bzw. die Breite und Länge, der V-förmigen Biegefedern die Eigenfrequenzen einfach und genau und unabhängig voneinander abstimmbar sind.

In den Unteransprüchen finden sich vorteilhafte Weiterbildungen und Verbesserungen des in Anspruch 1 angegebenen mikromechanischen Drehratensensors.

Gemäß einer bevorzugten Weiterbildung ist der Öffnungswinkel für beide V-förmige Biegefedern der Biegefedereinrichtung gleich. Somit muß nur ein Winkel für die Eigenfrequenzen optimiert werden.

Gemäß einer weiteren bevorzugten Weiterbildung sind die V-förmigen Biegefedern der Biegefedereinrichtung derart an der Brücke angebracht, daß sie sich zu einer X-Form ergänzen. Dies schafft eine symmetrische Biegefederform.

Gemäß einer weiteren bevorzugten Weiterbildung ist der Öffnungswinkel derart gewählt, daß die Eigenfrequenz um die senkrecht zur Substratoberfläche liegende Drehachse geringer ist als jede Eigenfrequenz um eine parallel zur Substratoberfläche liegende Drehachse. Dadurch läßt sich ein außerordentlich positives Erfassungsverhalten erreichen.

Gemäß einer weiteren bevorzugten Weiterbildung sind die Sockel an den gegenüberliegenden Seiten keilförmig ausgebildet. Die Brücke verbindet dabei die beiden Keilspitzen miteinander. Dadurch erhält der Sensor eine gute Auslenkbarkeit um die z-Achse.

Gemäß einer weiteren bevorzugten Weiterbildung ist die Brücke freischwebend über dem Substrat an den Sockeln aufgehängt.

Gemäß einer weiteren bevorzugten Weiterbildung ist er durch Silizium-Oberflächenmikromechanik herstellbar. Die Anwendung der Oberflächenmikromechanik zur Herstellung des erfindungsgemäßen mikromechanischen Drehratensensors, speziell des Serienherstellungsprozesses mit einer dicken Epipolyschicht von typischerweise 10 µm Dicke, erlaubt die Bildung einer steifen Sensorstruktur, die eine geringe Querempfindlichkeit erreichen läßt.

ZEICHNUNGEN

Ein Ausführungsbeispiel der Erfindung ist in den Zeichnungen dargestellt und in der nachfolgenden Beschreibung näher erläutert.

Es zeigen:

Fig. 1    eine schematische Draufsicht auf eine Ausführungsform des erfindungsgemäßen mikromechanischen Drehratensensors; und

Fig. 2    eine schematische Draufsicht auf einen bekannten mikromechanischen Drehratensensor.

BESCHREIBUNG DER AUSFÜHRUNGSBEISPIELE

In den Figuren bezeichnen gleiche Bezugszeichen gleiche oder funktionsgleiche Bestandteile.

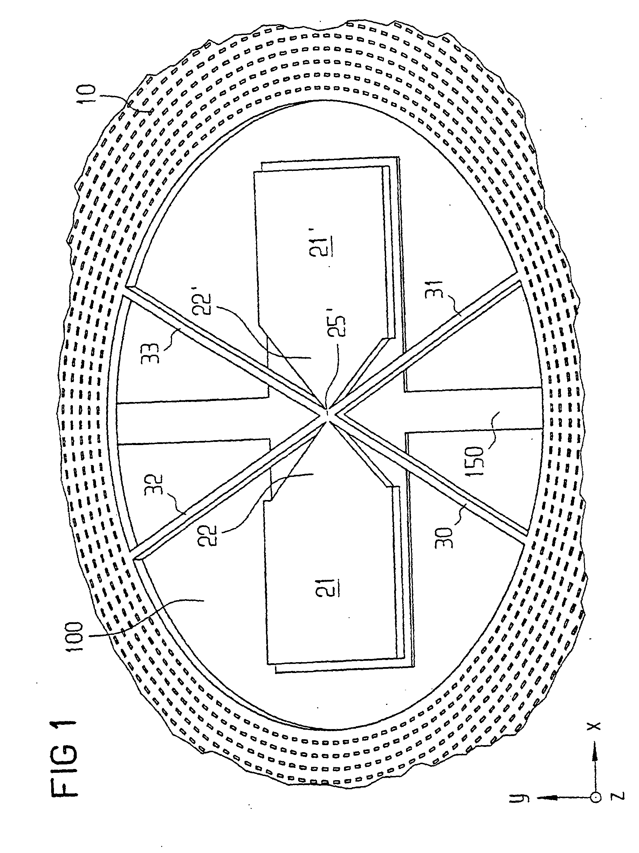

Fig. 1 zeigt eine schematische Draufsicht auf eine Ausführungsform des erfindungsgemäßen mikromechanischen Drehratensensors.

In Fig. 1 bezeichnen zusätzlich zu den bereits eingeführten Bezugszeichen 30-33 Biegefederschenkel zweier V-förmiger Biegefedern, 25' eine Brücke, 21, 21' Sockel und 150 eine elektrische Zuleitung.

Beim mikromechanischen Drehratensensor gemäß dieser Ausführungsform ist wie beim bekannten Beispiel nach Fig. 2 die ringförmige Schwungmasse 10 ist über eine Biegefedereinrichtung bestehend aus den zwei V-förmigen Biegefedern derart mit der Verankerungseinrichtung 21, 21', 25 verbunden, daß die Verankerungseinrichtung 20 im wesentlichen im Ringzentrum liegt, so daß die ringförmige Schwungmasse 10 so daß die ringförmige Schwungmasse um die senkrecht zur Substratoberfläche liegende z-Achse und die parallel zur Substratoberfläche liegende x- und y-Achse elastisch aus ihrer Ruhelage auslenkbar ist.

Jedoch weist die Verankerungseinrichtung 21, 21', 25' zwei gegenüberliegende fest mit dem Substrat 100 verbundene Sokkel 21, 21' auf, die an den gegenüberliegenden Seiten keilförmig ausgebildet sind, wobei die Brücke 25' die beiden Keilspitzen miteinander verbindet. Die Brücke 25' ist freischwebend über dem Substrat 100 an den Sockeln 21, 21' aufgehängt.

An den gegenüberliegenden Seiten der Brükke 25' ist jeweils eine der V-förmigen Biegefedern bestehend aus den Schenkeln 30, 31 bzw. 32, 33 derart angebracht, daß sich der jeweilige Scheitel an der Brükke 25' befindet und die Schenkel 30, 31 bzw. 32, 33 zur Schwungmasse 10 hin unter einem Öffnungswinkel aufgespreizt sind.

Der Öffnungswinkel ist für beide V-förmigen Biegefedern der Biegefedereinrichtung gleich, und die V-förmigen Biegefedern der Biegefedereinrichtung sind derart an der Brücke 25' angebracht, daß sie sich zu einer symmetrischen X-Form ergänzen.

Durch Festlegung der Federbreite und Federlänge der Schenkel 30, 31, 32, 33 der V-förmigen Biegefedern läßt sich die erste Eigenfrequenz um die z-Achse einstellen. Durch Festlegung des Öffnungswinkels zwischen den jeweiligen Federschenkeln kann die Eigenfrequenz für die Drehung aus der Substratebene um die x- bzw. y-Achse eingestellt werden. Das Verhältnis der Eigenfrequenzen zueinander wird so bestimmt, daß die Sensoreigenschaften, wie z.B. Empfindlichkeit, Störsicherheit und Temperaturstabilität, einen anwendungsspezifisch optimierten Wert annehmen.

Dabei wird z.B. der Öffnungswinkel derart gewählt ist, daß die Eigenfrequenz um die senkrecht zur Substratoberfläche liegende z-Achse geringer ist als jede Eigenfrequenz um eine parallel zur Substratoberfläche liegende Drehachse, d.h. die x- bzw. y-Achse.

Der mikromechanische Drehratensensor nach dieser Ausführungsform wird vorzugsweise durch Silizium-Oberflächenmikromechanik hergestellt.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere ist die Geometrie der Schwungmasse sowie der Biegefederanordnungen nicht auf die gezeigten Beispiele beschränkt. Allerdings sollten größere Abweichungen von der symmetrischen Anordnung um die Verankerung dann vermieden werden, wenn die Gefahr besteht, daß lineare Anteile der externen Beschleunigung das Meßergebnis verfälschen.

Die geschilderte Art der-Verpackung und des Hestellungsverfahrens ist ebenfalls nur als Beispiel zu verstehen, und andere Verfahren, wie z.B. galvanische Verfahren, können ebenfalls zu Herstellung des Drehratensensors verwendet werden.

## Patentansprüche

1. Mikromechanischer Drehratensensor mit:

   einem Substrat (100), welches eine auf dem Substrat (100) vorgesehene Verankerungseinrichtung (21; 21') aufweist; und

   einer ringförmigen Schwungmasse (10), die über eine Biegefedereinrichtung (30, 31; 32, 33) derart mit der Verankerungseinrichtung (21; 21'; 25') verbunden ist, daß der Verbindungsbereich mit der Verankerungseinrichtung (21; 21'; 25') im wesentlichen im Ringzentrum liegt, so daß die ringförmige Schwungmasse (10) um eine senkrecht zur Substratoberfläche liegende Drehachse und um mindestens eine parallel zur Substratoberfläche liegende Drehachse elastisch aus ihrer Ruhelage auslenkbar ist;

   **dadurch gekennzeichnet, daß**
   die Verankerungseinrichtung (21; 21'; 25') zwei gegenüberliegende fest mit dem Substrat (100) verbundene Sockel (21; 21') aufweist, die über eine Brücke (25') miteinander verbunden sind; und
   an den gegenüberliegenden Seiten der Brücke (25') jeweils eine V-förmige Biegefeder (30, 31; 32, 33) der Biegefedereinrichtung (30, 31; 32, 33) derart angebracht ist, daß sich der Scheitel an der Brücke (25') befindet und die Schenkel zur Schwungmasse (10) hin unter einem Öffnungswinkel aufgespreizt sind.

2. Mikromechanischer Drehratensensor nach Anspruch 1, **dadurch gekennzeichnet, daß** der Öffnungswinkel für beide V-förmige Biegefedern (30, 31; 32, 33) der Biegefedereinrichtung (30, 31; 32, 33) gleich ist.

3. Mikromechanischer Drehratensensor nach Anspruch 2, **dadurch gekennzeichnet, daß** die V-förmigen Biegefedern (30, 31; 32, 33) der Biegefedereinrichtung (30, 31; 32, 33) derart an der Brücke angebracht sind, daß sie sich zu einer X-Form ergänzen.

4. Mikromechanischer Drehratensensor nach Anspruch 3, **dadurch gekennzeichnet, daß** der Öffnungswinkel derart gewählt ist, daß die Eigenfrequenz um die senkrecht zur Substratoberfläche liegende Drehachse (z) geringer ist als jede Eigenfrequenz um eine parallel zur Substratoberfläche liegende Drehachse (x, y).

5. Mikromechanischer Drehratensensor nach einem der vorhergehenden Ansprüche, **dadurch gekennzeichnet, daß** die Sokkel (21; 21') an den gegenüberliegenden Seiten keilförmig ausgebildet sind und die Brücke (25') die beiden Keilspitzen miteinander verbindet.

6. Mikromechanischer Drehratensensor nach einem der vorhergehenden Ansprüche, **dadurch gekennzeichnet, daß** die Brücke (25') freischwebend über dem Substrat (100) an den Sockeln (21; 21') aufgehängt ist.

7. Mikromechanischer Drehratensensor nach einem der vorhergehenden Ansprüche, **dadurch gekennzeichnet, daß** er durch Silizium-Oberflächenmikromechanik oder eine andere Mikromechanik-Technologie herstellbar ist.

## Claims

1. Micromechanical rotation rate sensor having:

   a substrate (100) which has an anchoring device (21; 21') which is provided on the substrate (100); and
   an annular flywheel mass (10), which is connected to the anchoring device (21; 21'; 25') via a flexion spring device (30, 31; 32, 33) such that the connecting area to the anchoring device (21; 21'; 25') is located essentially at the centre of the ring, such that the annular flywheel mass (10) can be deflected elastically from its rest position about a rotation axis at right angles to the substrate surface and about at least one rotation axis parallel to the substrate surface;

   **characterized in that**
   the anchoring device (21; 21'; 25') has two opposite caps (21, 21'), which are firmly connected to the substrate (100) and are connected to one another via a link (25'); and
   a V-shaped flexion spring (30, 31; 32, 33) of the flexion spring device (30, 31; 32, 33) is fitted to each of the opposite sides of the link (25') such that the apex is located on the link (25') and the limbs are spread apart at an opening angle towards the flywheel mass (10).

2. Micromechanical rotation rate sensor according to Claim 1, **characterized in that** the opening angles of the two V-shaped flexion springs (30, 31; 32, 33) of the flexion spring device (30, 31; 32, 33) are the same.

3. Micromechanical rotation rate sensor according to Claim 2, **characterized in that** the V-shaped flexion springs (30, 31; 32, 33) of the flexion spring device (30, 31; 32, 33) are fitted to the link such that they complement one another to form an X shape.

4. Micromechanical rotation rate sensor according to Claim 3, **characterized in that** the opening angle is chosen such that the natural frequency about the rotation axis (z) which is at right angles to the substrate surface is lower than each natural frequency about a rotation axis (x, y) parallel to the substrate surface.

5. Micromechanical rotation rate sensor according to one of the preceding claims, **characterized in that** the caps (21; 21') on the opposite sides are wedge-shaped, and the link (25') connects the two wedge tips to one another.

6. Micromechanical rotation rate sensor according to one of the preceding claims, **characterized in that** the link (25') is suspended on the caps (21; 21') such that it floats freely above the substrate (100).

7. Micromechanical rotation rate sensor according to one of the preceding claims, **characterized in that** the rotation rate sensor can be produced by means of silicon surface micromechanics or some other micromechanics technology.

**Revendications**

1. Capteur micromécanique de taux de rotation comportant :

   - un substrat (100) qui présente une installation d'ancrage (21 ; 21') prévue sur le substrat (100) et
   - une masse d'inertie (10) annulaire liée à l'installation d'ancrage (21 : 21' ; 25') par l'intermédiaire d'une installation de ressort à flexion (30, 31 ; 32, 33) de telle manière que la zone de liaison munie de l'installation d'ancrage (21 ; 21' ; 25') se trouve pratiquement au centre de l'anneau, de sorte qu'on peut dévier de façon élastique de sa position de repos la masse d'inertie (10) annulaire autour d'un axe de rotation placé perpendiculairement à la surface du substrat et autour d'au moins un axe de rotation placé parallèlement à la surface du substrat,

   **caractérisé en ce que**

   - l'installation d'ancrage (21 ; 21' ; 25') présente deux socles (21 ; 21'), situés face à face et reliés solidairement au substrat (100), qui sont reliés l'un à l'autre par un pont (25') et
   - un ressort à flexion (30, 31 ; 32, 33) en V de l'installation de ressort à flexion (30, 31 ; 32, 33) est respectivement appliqué sur les côtés du pont (25') situés face à face de telle manière que le sommet se trouve sur le pont (25') et les côtés latéraux dirigés vers la masse d'inertie (10) sont écartés en formant un angle d'ouverture.

2. Capteur micromécanique de taux de rotation selon la revendication 1, **caractérisé en ce que** l'angle d'ouverture est égal pour les deux ressorts à flexion (30, 31 ; 32, 33) en V de l'installation de ressort à flexion (30, 31 ; 32, 33).

3. Capteur micromécanique de taux de rotation selon la revendication 2, **caractérisé en ce que** les ressorts à flexion (30, 31 ; 32, 33) en V de l'installation de ressort à flexion (30, 31 ; 32, 33) sont appliqués sur le pont de telle manière qu'ils se complètent sous forme de X.

4. Capteur micromécanique de taux de rotation selon la revendication 3, **caractérisé en ce que** l'angle d'ouverture est choisi de telle manière que la fréquence propre autour de l'axe de rotation (z) situé perpendiculairement à la surface du substrat est plus faible que la fréquence propre autour d'un axe de rotation (x, y) parallèle à la surface du substrat.

5. Capteur micromécanique de taux de rotation selon l'une des revendications précédentes, **caractérisé en ce que** les socles (21 ; 21') sont conçus en forme de coin sur les côtés situés face à face et le pont (25') relie l'une à l'autre les deux extrémités de coin.

6. Capteur micromécanique de taux de rotation selon l'une des revendications précédentes, **caractérisé en ce que** le pont (25') est suspendu sur les socles (21 ; 21') en flottant librement au-dessus du substrat (100).

7. Capteur micromécanique de taux de rotation selon l'une des revendications précédentes, **caractérisé en ce qu'** il peut être fabriqué par micromécanique de surface en silicium ou par une autre technologie micromécanique.

FIG 1

EP 1 218 693 B1

FIG 2

EP 1 218 693 B1